# DEMANDE DE BREVET EUROPEEN

(11) **EP 1 013 489 A1**
(43) Date de publication de la demande: **28.06.2000**
(21) Numéro de dépôt: 99125472.3
(22) Date de dépôt: 21.12.1999
(51) Int. Cl.: B60H 1/00

(54) **Dispositif de chauffage-climatisation d'encombrement réduit pour véhicule automobile**

(30) Priorité: 21.12.1998 FR 9816124
(71) Demandeur: VALEO CLIMATISATION, 78321 La Verrière (FR)
(72) Inventeur: Elliot, Gilles, 91080 Courcouronnes (FR)

(57) **Abrégé**

Un dispositif de chauffage-climatisation de véhicule automobile comprend un pulseur (18) envoyant un flux d'air au travers d'un évaporateur (30) et d'un radiateur de chauffage (34). Le flux d'air traverse l'évaporateur (30) selon une première direction (F1) sensiblement perpendiculaire à un premier plan principal (X) de l'évaporateur, est dévié ensuite par des premiers moyens déflecteurs (32) selon une deuxième direction (F2) sensiblement perpendiculaire à un second plan principal (Y) du radiateur de chauffage (34), et une partie au moins du flux d'air traverse le radiateur de chauffage pour être ensuite déviée par des seconds moyens déflecteurs (46) selon une direction sensiblement parallèle au second plan principal (Y). Le dispositif présente un encombrement réduit et peut être logé dans la planche de bord (14) du véhicule.

## Description

L'invention concerne un dispositif de chauffage-climatisation d'encombrement réduit pour un véhicule automobile.

Elle concerne plus particulièrement un dispositif propre à être logé dans une planche de bord de véhicule automobile et comprenant un pulseur envoyant un flux d'air au travers d'un évaporateur et d'un radiateur de chauffage, le flux d'air étant ensuite diffusé dans l'habitacle du véhicule par des moyens de distribution d'air.

Dans un dispositif de ce type, le pulseur est alimenté soit par de l'air extérieur prélevé hors de l'habitacle du véhicule, soit par de l'air recirculé prélevé à l'intérieur de l'habitacle. Le pulseur envoie un flux d'air au travers de l'évaporateur, lequel est relié à un circuit de climatisation classique, et éventuellement au travers du radiateur de chauffage qui est habituellement traversé par un fluide chaud, à savoir le liquide de refroidissement du moteur du véhicule. Le flux d'air ainsi refroidi et/ou réchauffé est réparti, grâce aux moyens de distribution, entre différentes buses débouchant dans l'habitacle.

En outre, un tel dispositif comprend habituellement un filtre à air disposé dans le trajet du flux d'air pour retenir les impuretés véhiculées par celui-ci, ce filtre à air étant habituellement disposé entre le pulseur et l'évaporateur.

Récemment, il a été proposé de regrouper les éléments constitutifs du dispositif dans un volume de forme générale parallélépipédique à l'intérieur de la planche de bord, de manière à procurer un gain de place et à permettre une standardisation des fabrications.

Toutefois, cette solution impose une position horizontale à l'évaporateur ainsi qu'un long trajet de circulation au flux d'air, ce qui génère des pertes de charge et des pertes thermiques.

Un dispositif de ce type est décrit par exemple dans le document EP 0 788 907.

L'invention a notamment pour but de surmonter les inconvénients précités.

Elle propose à cet effet un dispositif de chauffage-climatisation du type défini en introduction, dans lequel la surface principale de l'évaporateur s'étendant dans un premier plan principal et la surface principale du radiateur de chauffage s'étendant dans un second plan principal, l'évaporateur est traversé par un flux d'air selon une première direction sensiblement perpendiculaire au premier plan principal, ce flux d'air est dévié ensuite par des premiers moyens déflecteurs pour l'orienter selon une seconde direction sensiblement perpendiculaire au second plan principal, et dans lequel au moins une partie du flux d'air traverse le radiateur de chauffage, cette partie étant ensuite déviée par des seconds moyens déflecteurs pour l'orienter selon une direction sensiblement parallèle au second plan principal.

Grâce à cette structure, le flux d'air subit globalement une déviation à angle droit entre la traversée de l'évaporateur et celle du radiateur. Comme le flux d'air traverse en permanence le radiateur, il n'est pas nécessaire de prévoir un volet de mixage d'air utilisé habituellement pour mélanger un flux d'air froid et un flux d'air chaud et qui génère de l'encombrement.

De préférence, la sortie du radiateur de chauffage communique avec une chambre de sortie, cette dernière communiquant directement avec les moyens de distribution d'air au travers d'un volet de distribution.

Cette communication directe évite ainsi l'utilisation du volet de mixage qui est disposé habituellement entre le radiateur de chauffage et les moyens de distribution d'air.

Le radiateur de chauffage est avantageusement un échangeur de chaleur du type liquide/air propre à être traversé par un fluide chaud et muni d'un robinet de réglage du débit du fluide chaud.

Dans une forme de réalisation de l'invention, le dispositif comprend en outre un conduit de dérivation qui communique d'une part avec les premiers moyens déflecteurs et d'autre part avec la chambre de sortie sous le contrôle d'un volet de réglage, de telle sorte que la chambre de sortie est alimentée par un flux d'air provenant du radiateur de chauffage et éventuellement par un flux d'air provenant de l'évaporateur.

Les premiers moyens déflecteurs comprennent avantageusement une canalisation coudée.

Les seconds moyens déflecteurs comprennent avantageusement une cloison d'un carter.

Le dispositif de l'invention peut comprendre en outre un radiateur électrique d'appoint disposé en aval du radiateur de chauffage en sorte que le flux d'air traverse successivement le radiateur de chauffage et le radiateur électrique d'appoint.

Dans une forme de réalisation avantageuse, les moyens de distribution d'air comprennent au moins un conduit d'aération qui fait communiquer la chambre de sortie avec au moins une buse d'aération prévue dans la planche de bord.

De préférence, les moyens de distribution d'air comprennent en outre au moins un conduit de dégivrage qui fait communiquer la chambre de sortie avec au moins une buse de dégivrage/désembuage.

Dans une forme de réalisation avantageuse, les moyens de distribution d'air comprennent un conduit de dégivrage latéral qui est délimité au moins en partie par une poutre creuse servant d'armature à la planche de bord et faisant communiquer la chambre de sortie avec des buses de dégivrage latérales.

Avantageusement aussi, les moyens de distribution d'air comprennent un conduit de dégivrage supérieur qui communique avec la chambre de sortie par l'intermédiaire d'un conduit de raccordement et qui communique avec des buses de dégivrage/désembuage du pare-brise.

Selon une autre caractéristique avantageuse, les moyens de distribution d'air comprennent un conduit d'aération inférieur qui fait communiquer la chambre de sortie avec au moins une buse d'aération débouchant vers le bas de l'habitacle, au niveau des pieds des passagers.

Il est avantageux que le conduit d'aération inférieur communique avec la chambre de sortie par l'intermédiaire du conduit de raccordement défini plus haut, si bien que ce conduit de raccordement communique à la fois avec le conduit de dégivrage supérieur et avec le conduit d'aération inférieur.

On prévoit alors avantageusement un volet de réglage à l'intersection du conduit de raccordement, du conduit de dégivrage supérieur et du conduit d'aération inférieur pour diriger sélectivement un flux d'air vers le conduit de dégivrage supérieur et/ou le conduit d'aération inférieur.

Selon une autre caractéristique de l'invention, le dispositif comprend un volet de distribution d'air disposé à une extrémité de la chambre de sortie et on prévoit une position intermédiaire du volet de distribution d'air, dans laquelle la chambre de sortie communique avec le conduit de dégivrage supérieur via le conduit de raccordement et dans laquelle le conduit de dégivrage latéral est obstrué.

Selon encore une autre caractéristique de l'invention, le conduit de dégivrage supérieur et le conduit d'aération inférieur s'étendent tous deux le long du tablier qui sépare le compartiment moteur de l'habitacle du véhicule.

L'invention prévoit aussi qu'une paroi du conduit d'aération inférieur et/ou une paroi du conduit de dégivrage supérieur est constituée par un revêtement insonorisant du tablier qui sépare le compartiment moteur de l'habitacle du véhicule.

En ce cas, il est avantageux que la paroi du conduit d'aération intérieur et la paroi du conduit de dégivrage supérieur soient une paroi unique constituée par le revêtement insonorisant du tablier.

Le conduit de raccordement peut comprendre en outre un radiateur électrique d'appoint pour chauffer le flux d'air évacué par le conduit de dégivrage supérieur et/ou par le conduit d'aération inférieur.

Avantageusement, le dispositif comporte des commandes de chauffage indépendantes pour piloter le radiateur de chauffage et le radiateur électrique d'appoint.

Selon une autre caractéristique de l'invention, le pulseur , l'évaporateur, le radiateur de chauffage et une partie au moins des moyens de distribution sont inclus dans un carter propre à être intégré dans la planche de bord.

Avantageusement, ce carter est prévu pour être placé du côté du poste de conduite et au-dessus de la colonne de direction.

Selon encore une autre caractéristique de l'invention, dans une section principale, le carter présente une forme trapézoïdale allongée selon un axe longitudinal (A) sensiblement parallèle à la colonne de direction du véhicule, et le rapport entre la dimension du carter selon cet axe longitudinal et la dimension du carter selon un axe perpendiculaire à cet axe principal est sensiblement supérieur ou égal à 1,3.

De préférence, le rapport entre la dimension du carter selon l'axe longitudinal et la dimension du carter selon l'axe perpendiculaire est sensiblement égal à 1,6.

Dans la description qui suit, faite seulement à titre d'exemple, on se réfère aux dessins annexés, sur lesquels :
- la figure 1 est une vue en coupe d'une demi-planche de bord de véhicule automobile, correspondant au côté du poste de conduite, et logeant un dispositif de chauffage-climatisation selon un premier mode de réalisation de l'invention ;
- la figure 2 est une vue en coupe, à échelle agrandie, selon la ligne II-II de la figure 1 ; et
- la figure 3 est une vue en coupe analogue à la figure 2 dans un second mode de réalisation de l'invention.

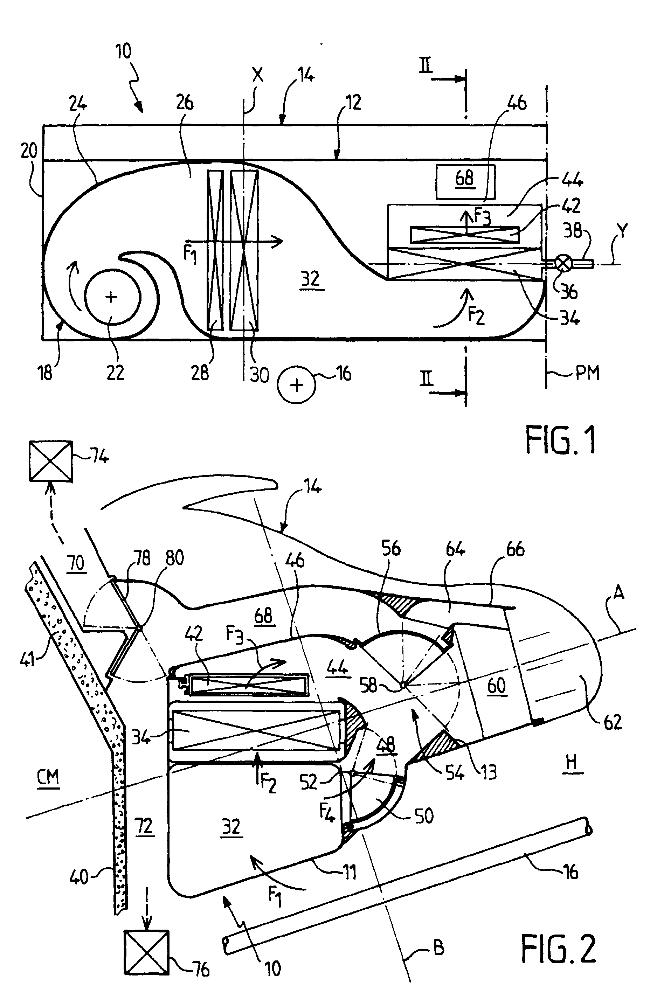

On se réfère tout d'abord à la figure 1 qui représente un dispositif 10 de chauffage-climatisation de l'habitacle d'un véhicule automobile. Ce dispositif comprend un carter 12 de forme approximativement parallélépipédique, propre à être intégré dans une moitié de la planche de bord 14 du véhicule. Le dispositif 10 est prévu pour être disposé au-dessus de la colonne de direction 16, de manière à s'étendre d'un côté du plan vertical médian PM du véhicule.

Le dispositif peut être monté aussi bien sur un véhicule de conduite à droite que sur un véhicule de conduite à gauche.

On appelle section principale, toute section du carter 12 dans un plan sensiblement parallèle à la surface principale d'un évaporateur 30 (défini plus loin) logé dans le carter. La figure 2 représente une vue en coupe selon une des sections principales du carter. Vu en coupe selon sa section principale, le carter 12 a la forme générale d'un trapèze allongé. Dans le plan défini par la section principale du carter 12, on appelle "axe longitudinal A", l'axe parallèle à la colonne de direction 16 et formant un angle d'environ 45° avec la planche de bord 14. De plus on appelle "axe transversal B", l'axe perpendiculaire à l'axe transversal A du carter. Selon l'invention, le rapport entre la dimension du carter 12 selon son axe longitudinal A et la dimension du carter selon son axe transversal B est sensiblement supérieur ou égal à 1,3. Avantageusement, ce rapport est sensiblement égal à 1,6.

Le dispositif 10 comprend un pulseur d'air 18 logé dans le carter 12 et disposé proche du flanc gauche 20 du véhicule. Le pulseur 18 comprend une turbine 22 entraînée en rotation par un moteur électrique (non représenté) et disposée à l'intérieur d'un boîtier 24 en forme de volute. Le pulseur est propre à être alimenté soit par de l'air extérieur prélevé hors de l'habitacle H du véhicule soit par de l'air recirculé prélevé à l'intérieur de cet habitacle, soit encore par un mélange des deux. La turbine aspire de l'air axialement et le refoule radialement pour l'accélérer tangentiellement.

Le pulseur 18 possède une sortie 26 par laquelle le flux d'air F1 est refoulé dans une direction sensiblement horizontale.

Le flux F1 traverse successivement un filtre à air 28 et un évaporateur 30 qui sont disposés tous deux dans des plans parallèles sensiblement verticaux. Le filtre à air 28 et l'évaporateur 30 ont des grandes faces respectives qui sont parallèles entre elles et sensiblement parallèles au plan médian PM du véhicule. Le filtre à air 28 et l'évaporateur 30 sont logés à l'entrée d'une canalisation coudée 32, formant déflecteur, qui permet de dévier sensiblement à angle droit le flux d'air sortant de l'évaporateur 30, de manière à le diriger verticalement en direction ascendante comme représenté par la flèche F2.

A la sortie de la canalisation 32 est prévu un radiateur de chauffage 34 qui est dans une position sensiblement horizontale, en étant situé à proximité du plan médian PM du véhicule. En d'autres termes, le radiateur 34 possède des grandes faces respectives (face d'entrée et face de sortie) qui sont sensiblement horizontales. Le radiateur de chauffage 34 est un échangeur de chaleur du type air/liquide propre à être traversé par un fluide chaud, typiquement le liquide servant au refroidissement du moteur du véhicule. Un robinet de réglage de débit 36 est prévu sur une tubulure 38 reliée au radiateur 34, de manière à régler le débit du fluide chaud traversant le radiateur, pour fournir un réglage de température.

Dans l'exemple, le flux F2 traverse toujours au moins en partie le radiateur 34, lequel permet un réglage de la température du flux d'air qui le traverse, selon la technique dite du "réglage sur l'eau". Ceci permet de produire, en sortie du radiateur 34, un flux d'air F3 dont la température a été ajustée.

La figure 2 montre également les positions respectives de la canalisation 32 et du radiateur 34. Comme on peut le voir, le dispositif 10 est disposé près du tablier 40 qui sépare le compartiment moteur CM de l'habitacle H du véhicule.

Le dispositif 10 comprend en outre un radiateur électrique d'appoint 42 (figures 1 et 2) disposé en aval du radiateur de chauffage 34, en sorte que le flux d'air traverse successivement le radiateur de chauffage et les radiateurs électriques d'appoint. Ce radiateur d'appoint 42 se trouve placé au-dessus du radiateur 34 et dans une position sensiblement horizontale. Le radiateur 42 comprend avantageusement des résistances électriques (non représentées) du type à coefficient de température positif (appelées résistances CTP).

Le flux d'air F3 est recueilli dans une chambre de sortie 44 qui communique avec la sortie du radiateur et avec des moyens de distribution d'air qui vont être décrits maintenant en référence à la figure 2. La chambre de sortie 44 s'étend au moins en partie au-dessus du radiateur d'appoint 42 et elle est limitée en partie supérieure par une cloison 46 formant déflecteur.

Comme montré sur la figure 1, l'évaporateur 30 présente une surface principale s'étendant dans un premier plan principal X et le radiateur de chauffage 34 présente une surface principale s'étendant dans un second plan principal (Y).

L'évaporateur 30 est traversé par le flux d'air F1 selon une première direction sensiblement perpendiculaire au premier plan principal X, et ce flux d'air est dévié ensuite par la canalisation coudée 32 formant déflecteur. Le flux d'air est ainsi orienté selon une seconde direction (flux d'air F2) sensiblement perpendiculaire au second plan principal Y.

Au moins une partie du flux d'air traverse le radiateur de chauffage 34, et cette partie est ensuite déviée par la cloison 46 formant déflecteur pour l'orienter selon une direction sensiblement parallèle au second plan principal Y.

Le dispositif comprend en outre un conduit de dérivation 48 (figure 2) qui communique d'une part avec la canalisation coudée 32 et d'autre part avec la chambre de sortie 44 sous le contrôle d'un volet de réglage 50, lequel est ici constitué d'un volet du type tambour monté pivotant autour d'un axe horizontal 52. Ce volet peut être déplacé entre deux positions extrêmes : une position d'ouverture (représentée en trait plein) et une position de fermeture (représentée en trait interrompu) dans lesquelles le conduit de dérivation est respectivement ouvert et fermé.

Lorsque le conduit est ouvert, la chambre de sortie 44 est alimentée à la fois par le flux d'air F3 issu du radiateur de chauffage et par un flux d'air F4 provenant directement de la canalisation 32, donc de l'évaporateur. Par contre, lorsque le volet 50 est fermé, la chambre de sortie 44 est alimentée uniquement par de l'air provenant du radiateur 34.

Ainsi, dans tous les cas, la chambre de sortie 44 est alimentée au moins en partie par un flux d'air provenant du radiateur 34. Le volet 50 est un volet de faible encombrement par rapport à un volet de mixage classique qui serait utilisé dans le cas où le réglage de la température se ferait par un mélange d'un flux d'air froid et d'air chaud, dans la technique dite du "réglage sur l'air".

Les moyens de distribution d'air du dispositif 10 comprennent au moins un conduit d'aération 60 qui est intégré dans la planche de bord et qui s'étend avantageusement entre les côtés droit et gauche de l'habitacle. Ce conduit 60 fait communiquer la chambre de sortie 44 avec au moins une buse d'aération 62 prévue en partie centrale de la planche de bord et éventuellement des buses d'aération latérales (non visibles sur le dessin) prévues des deux côtés de la planche de bord.

Par ailleurs, les moyens de distribution comprennent un conduit de dégivrage latéral 64 qui est délimité au moins en partie par une poutre creuse 66 servant d'armature à la planche de bord. Le conduit 64 fait communiquer la chambre de sortie avec des buses de dégivrage latérales (non représentées) permettant d'assurer le dégivrage/désembuage de vitres latérales du véhicule.

En outre, les moyens de distribution comprennent un conduit de raccordement 68 qui s'étend au-dessus de la cloison 46 et qui fait communiquer la chambre de sortie 44 avec deux conduits 70 et 72. Le conduit 70 est un conduit de dégivrage supérieur qui alimente des buses 74 (représentées schématiquement) servant au dégivrage/désembuage du pare-brise. Le conduit 72 est un conduit d'aération inférieur qui alimente au moins une buse d'aération 76 (représentée schématiquement sur la figure 2) qui débouche vers le bas de l'habitacle, c'est-à-dire dans la région des pieds des occupants du véhicule.

Un volet de distribution 56 est disposé à une extrémité 54 de la chambre de sortie 44 (figure 2). Ce volet 56 est du type tambour. Il permet, en fonction de sa position, de répartir le flux d'air provenant de la chambre de sortie 44 entre différentes buses de sortie qui débouchent dans l'habitacle, et cela en fonction du confort aérothermique souhaité par le ou les passagers du véhicule.

Par exemple, lorsque le volet de distribution 56 est en butée contre une extrémité de la cloison 46, la totalité du flux d'air issu de la chambre de sortie 44 est évacuée dans le conduit d'aération central 60.

Lorsque le volet de distribution 56 est en butée contre un appui 13 d'une paroi inférieure 11 du carter 12, le flux d'air provenant de la chambre de sortie 44 est envoyé dans l'habitacle par les buses de dégivrage latérales, les buses de dégivrage du pare-brise 74 et les buses d'aération pieds 76.

Avantageusement, une position intermédiaire du volet de distribution 56 permet de dégivrer le pare-brise sans pour autant envoyer de l'air vers les vitres latérales du véhicule. Sur des appareils de climatisation classiques, il n'est en général pas possible de découpler la commande de dégivrage centrale de la commande de dégivrage latérale.

Comme on peut le voir sur la figure 2, les conduits 70 et 72 sont dirigés de manière sensiblement verticale et s'étendent tous deux le long du tablier 40.

Une des parois des conduits 70 et 72 est constituée par un revêtement insonorisant 41 qui est généralement collé sur le tablier 40 séparant le compartiment moteur du compartiment habitacle. Cette disposition des conduits 70 et 72 le long du revêtement insonorisant 41 a notamment pour avantage de diminuer les bruits issus de la propagation de l'air dans un conduit.

Un volet de réglage 78 du type papillon, comprenant deux ailes non coplanaires, est monté pivotant autour d'un axe 80 pour diriger le flux d'air traité provenant du conduit de raccordement 68 vers le conduit de dégivrage supérieur 70 et/ou le conduit d'aération inférieur 72. Le volet 78 est situé à l'intersection du conduit de raccordement 68 et des conduits 70 et 72.

Ainsi, en fonction des positions respectives des volets 56 et 78, il est possible d'envoyer le flux d'air traité vers les buses souhaitées.

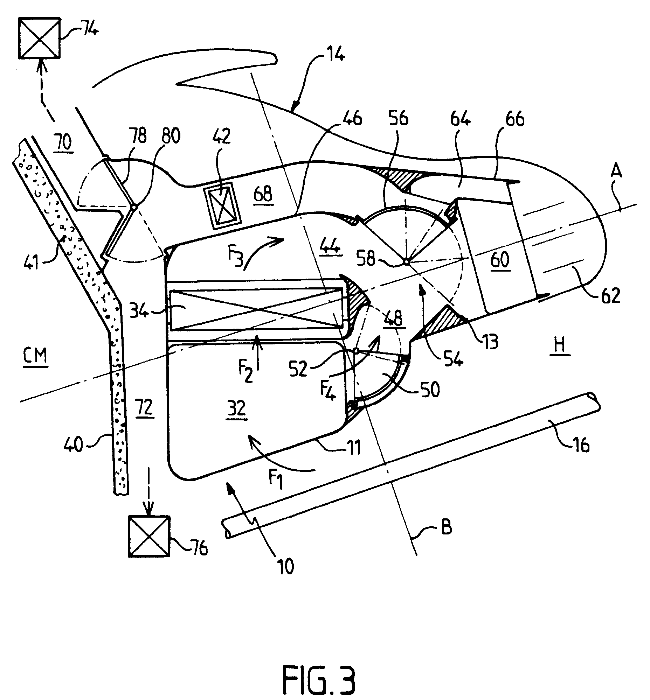

Selon un second mode de réalisation, représenté à la figure 3, le radiateur électrique d'appoint 42 n'est pas disposé parallèlement au radiateur de chauffage 34, mais il est fixé sur la paroi 46 à l'extérieur du carter 12, au niveau du conduit de raccordement 68. Avantageusement, l'utilisateur peut commander indépendamment le radiateur de chauffage 34 et le radiateur d'appoint 42.

Le dispositif de l'invention convient pour être utilisé dans différents types de véhicules, c'est-à-dire des véhicules à conduite à droite ou des véhicules à conduite à gauche, dans lesquels il peut s'implanter aisément dans la planche de bord.

## Revendications

1. Dispositif de chauffage-climatisation propre à être logé dans une planche de bord (14) d'un véhicule automobile et comprenant un pulseur (18) envoyant un flux d'air au travers d'un évaporateur (30) et d'un radiateur de chauffage (34), le flux d'air étant ensuite diffusé dans l'habitacle du véhicule par des moyens de distribution d'air,
caractérisé en ce que, la surface principale de l'évaporateur (30) s'étendant dans un premier plan principal (X) et la surface principale du radiateur de chauffage (34) s'étendant dans un second plan principal (Y), l'évaporateur (30) est traversé par un flux d'air selon une première direction (F1) sensiblement perpendiculaire au premier plan principal (X), ce flux d'air est dévié ensuite par des premiers moyens déflecteurs (32) pour l'orienter selon une seconde direction (F2) sensiblement perpendiculaire au second plan principal (Y), et en ce qu'au moins une partie du flux d'air traverse le radiateur de chauffage (34), cette partie étant ensuite déviée par des seconds moyens déflecteurs (46) pour l'orienter selon une direction sensiblement parallèle au second plan principal (Y).

2. Dispositif selon la revendication 1, caractérisé en ce que la sortie du radiateur de chauffage (34) communique avec une chambre de sortie (44), cette dernière communiquant directement avec les moyens de distribution d'air au travers d'un volet de distribution (56).

3. Dispositif selon l'une des revendications 1 et 2, caractérisé en ce que le radiateur de chauffage (34) est un échangeur de chaleur du type liquide/air propre à être traversé par un fluide chaud et muni d'un robinet (36) de réglage du débit du fluide chaud.

4. Dispositif selon l'une des revendications 2 et 3, caractérisé en ce qu'il comprend en outre un conduit de dérivation (48) qui communique d'une part avec les premiers moyens déflecteurs (32) et d'autre part avec la chambre de sortie (44) sous le contrôle d'un volet de réglage (50), de telle sorte que la chambre de sortie (44) est alimentée par un flux d'air (F3) provenant du radiateur de chauffage et éventuellement par un flux d'air (F4) provenant de l'évaporateur.

5. Dispositif selon l'une des revendications 1 à 4, caractérisé en ce que les premiers moyens déflecteurs comprennent une canalisation coudée (32).

6. Dispositif selon l'une des revendications 1 à 5, caractérisé en ce que les seconds moyens déflecteurs comprennent une cloison (46) d'un carter (12).

7. Dispositif selon l'une des revendications 1 à 6, caractérisé en ce qu'il comprend en outre un radiateur électrique d'appoint (42) disposé en aval du radiateur de chauffage (34) en sorte que le flux d'air (F2) traverse successivement le radiateur de chauffage (34) et le radiateur électrique d'appoint (42).

8. Dispositif selon l'une des revendications 2 à 7, caractérisé en ce que les moyens de distribution d'air comprennent au moins un conduit d'aération (60) qui fait communiquer la chambre de sortie (44) avec au moins une buse d'aération (62) prévue dans la planche de bord.

9. Dispositif selon l'une des revendications 2 à 8, caractérisé en ce que les moyens de distribution d'air comprennent en outre au moins un conduit de dégivrage (64 ; 70) qui fait communiquer la chambre de sortie (44) avec au moins une buse de dégivrage/désembuage.

10. Dispositif selon la revendication 9, caractérisé en ce que les moyens de distribution d'air comprennent un conduit de dégivrage latéral (64) qui est délimité au moins en partie par une poutre creuse (66) servant d'armature à la planche de bord et faisant communiquer la chambre de sortie (44) avec des buses de dégivrage latérales.

11. Dispositif selon l'une des revendications 9 et 10, caractérisé en ce que les moyens de distribution d'air comprennent un conduit de dégivrage supérieur (70) qui communique avec la chambre de sortie (44) par l'intermédiaire d'un conduit de raccordement (68) et qui communique avec des buses (74) de dégivrage/désembuage du pare-brise.

12. Dispositif selon l'une des revendications 2 à 11, caractérisé en ce que les moyens de distribution d'air comprennent un conduit d'aération inférieur (72) qui fait communiquer la chambre de sortie (44) avec au moins une buse d'aération (76) débouchant vers le bas de l'habitacle, au niveau des pieds des passagers.

13. Dispositif selon la revendication 12, caractérisé en ce que le conduit d'aération inférieur (72) communique avec la chambre de sortie (44) par l'intermédiaire du conduit de raccordement (68) selon la revendication 11, si bien que ce conduit de raccordement communique à la fois avec le conduit de dégivrage supérieur (70) et avec le conduit d'aération inférieur (72).

14. Dispositif selon la revendication 13, caractérisé en ce qu'un volet de réglage (78) est prévu à l'intersection du conduit de raccordement (68), du conduit de dégivrage supérieur (70) et du conduit d'aération inférieur (72) pour diriger sélectivement un flux d'air vers le conduit de dégivrage supérieur et/ou le conduit d'aération inférieur.

15. Dispositif selon l'une des revendications 11 à 14, caractérisé en ce qu'il comprend un volet de distribution (56) disposé à une extrémité de la chambre de sortie (44), et en ce qu'il est prévu une position intermédiaire du volet de distribution d'air (56) dans laquelle la chambre de sortie (44) communique avec le conduit de dégivrage supérieur (70) via le conduit de raccordement (68) et dans laquelle le conduit de dégivrage latéral (64) est obstrué.

16. Dispositif selon l'une des revendications 12 à 15, caractérisé en ce que le conduit de dégivrage supérieur (70) et le conduit d'aération inférieur (72) s'étendent tous deux le long du tablier (40) qui sépare le compartiment moteur (CM) de l'habitacle (H) du véhicule.

17. Dispositif selon l'une des revendications 12 à 16, caractérisé en ce qu'une paroi du conduit d'aération inférieur (72) et/ou une paroi du conduit de dégivrage supérieur (70) selon la revendication 11 est constituée par un revêtement insonorisant (41) du tablier (40) qui sépare le compartiment moteur (CM) de l'habitacle (H) du véhicule.

18. Dispositif selon la revendication 17, caractérisé en ce que la paroi du conduit d'aération inférieur (72) et la paroi du conduit de dégivrage supérieur (70) sont une paroi unique constituée par le revêtement insonorisant (41) du tablier (40).

19. Dispositif selon l'une des revendications 11 à 18, caractérisé en ce que le conduit de raccordement (68) comprend en outre un radiateur électrique d'appoint (42) pour chauffer le flux d'air évacué par le conduit de dégivrage supérieur (70) et/ou par le conduit d'aération inférieur (72).

20. Dispositif selon la revendication 19, caractérisé en ce qu'il comporte des commandes de chauffage indépendantes pour piloter le radiateur de chauffage (34) et le radiateur électrique d'appoint (42).

21. Dispositif selon l'une des revendications 1 à 20, caractérisé en ce que le pulseur (18), l'évaporateur (30), le radiateur de chauffage (34) et une partie au moins des moyens de distribution sont inclus dans un carter (12) propre à être intégré dans la planche de bord (14).

22. Dispositif selon la revendication 21, caractérisé en ce que le carter (12) est prévu pour être placé du côté du poste de conduite et au-dessus de la colonne de direction (16).

23. Dispositif selon l'une des revendications 21 et 22, caractérisé en ce que, dans une section principale, le carter (12) présente une forme trapézoïdale allongée selon un axe longitudinal (A) sensiblement parallèle à la colonne de direction du véhicule (16), et en ce que le rapport entre la dimension du carter selon cet axe longitudinal (A) et la dimension du carter selon un axe (B) perpendiculaire à cet axe principal (A) est sensiblement supérieur ou égal à 1,3.

24. Dispositif selon la revendication 23, caractérisé en ce que le rapport entre la dimension du carter selon l'axe longitudinal (A) et la dimension du carter selon l'axe perpendiculaire (B) est sensiblement égal à 1,6.
